Europäisches Patentamt

European Patent Office

Office européen des brevets

(19)

(11) Publication number: 0 199 121
A1

# EUROPEAN PATENT APPLICATION

(21) Application number: 86104016.0

(22) Date of filing: 24.03.86

(51) Int. Cl.⁴: A01N 25/18

A request for addition of missing page 4 of the description has been filed pursuant to Rule 88 EPC. A decision on the request will be taken during the proceedings before the Examining Division (Guidelines for Examination in the EPO, A-V, 2.2).

(30) Priority: 25.03.85 IT 2005485

(43) Date of publication of application:
29.10.86 Bulletin 86/44

(84) Designated Contracting States:
BE DE FR GB NL

(71) Applicant: ISTITUTO GUIDO DONEGANI S.p.A.
Via Caduti del Lavoro
I-28100 Novara(IT)

(72) Inventor: Capizzi, Amedeo
50, via Solari
I-20144 Milan(IT)
Inventor: Arsura, Emilio
42/d, via Martiri di Cefalonia
I-20097 S. Donato Milanese Milan(IT)
Inventor: Spinelli, Pia
38, via Cadore
I-20135 Milan(IT)

(74) Representative: Barz, Peter, Dr. et al
Patentanwälte Dipl.-Ing. G. Dannenberg Dr.
P. Weinhold, Dr. D. Gudel Dipl.-Ing. S.
Schubert, Dr. P. Barz Siegfriedstrasse 8
D-8000 München 40(DE)

(54) Device for fighting insects.

(57) A device which displays an attractive and toxic action suitable for fighting insects, consists of a substrate of fibres and/or fibrils containing a pheromone in adsorbed or dispersed form, said substrate being partially coated with a layer impermeable to the pheromone and carrying, adhering to its external surface, an insecticide or a substrate impregnated with an insecticide.

## DEVICE FOR FIGHTING INSECTS

The present invention relates to a device which displays an attractive and poisonous action, suited for fighting insects, and more particularly, it concerns a device delivering a pheromone and developing insecticide activity which makes it possible to attract and eliminate adult insects.

For the past ten years pheromones have gained great importance in the field of research for new methods for controlling insect species which are noxious to agricultural cultivations. Compared to conventional insecticides, the pheromones have the advantage of offering a considerable selectivity towards one specific or a limited number of insect species, without thereby involving the harmless or even useful fauna.

It is thus possible to fight a certain parasite by means of a pheromone without disturbing the surrounding ecological equilibrium.

The pheromones are secreted from the body of the insects by special glands and, in accordance with the type of reaction they induce, they may be subdivided into: aggregating, tracing, alarming or warning, sexually attracting, etc. pheromones. The most propagated and most interesting pheromones, in terms of the possibilities they offer for the control of noxious insect species, are the sexual pheromones which are secreted by the female, but in a number of species also by the male insect, and which attract the individuals of the opposite sex for mating. Small quantities of such "attractive" pheromones prepared synthetically provoke the same reactions which are induced in the insect by the naturally occuring compound.

The synthetical sexual pheromones are used both for monitoring the growth of parasite populations and for directly controlling the noxious species by hindering the mating of the insects.

The first type of application (monitoring) allows to follow, by means of periodical drawing of samples of the insects captured in special traps, the fluctuation of the parasite population by observing their biological cycle and by forecasting the possible attainment of the "threshold of noxiousness". On the basis of these data, it is then possible to decide on the opportunity and the moment for intervening with pesticides.

In the second type of application the sexual pheromones may partially substitute or totally replace conventional insecticides and directly control the noxious species by interference with its reproductive activity.

For this purpose, mainly two techniques are employed: massive capture and disorientation. The first comprises attracting and thereby capturing the greatest possible number of adult insects by means of special traps baited with the pheromone. The second technique comprises diffusing the attracting agent in the air in such a way as to present the insects from locating the individuals of the opposite sex, thus, hindering the mating.

The diffusion of the pheromone may be achieved by depositing the product at various points of suitable distance within the cultivation to be protected, or by distributing the product uniformly over the whole area. In the first case, there are used dispensers, in which the active component is incorporated in substrates of different nature, thus, allowing control of the releasing rate and the persistance. In the second case, there are used special formulations of controlled releasing rate, which are applied from the ground or from the air.

The two systems of pheromone diffusion differ in their concept from each other in as much as in the case of the localized dispensers these simulate the recalling insect, thereby creating numerous false traces, while the uniformly diffused pheromone swamps the natural recalls of the insects thereby hindering their perception by the individual insect.

The first system is practicised for instance, by using capillaries having an open end through which the active component volatilizes (US-A-4 017 030), while the second system is carried out using microcapsules having polyamide walls (US-A-3 577 515) or a gel (US-A-2 800 457 and 2 800 458) or special mixtures of absorbing and adsorbing powders (US-A-4 325 941).

These systems are used for fighting parasites, but they allow satisfactory results only for a few insect species and only in particular situations. In fact, if for instance the insects to be controlled are very mobile and their number is very high, there will be a considerably high probability of casual approaches between the individuals with a consequent loss of efficacy of the method. This risk may be reduced by increasing the number of dispensers or the concentration of the uniformly distributed pheromone, which, however, involves higher costs.

It is, therefore, an object of the present invention to provide a device suitable for releasing pheromones into the air in a similar way as it occurs in nature, and which exerts a toxic action, thus, allowing an effective control of the noxious insect species both by means of disorientation and the attraction and elimination of the adult insects.

It has now been found that this and other objects can be achieved by means of a device consisting of a substrate of fibres and/or fibrils containing a pheromone in adsorbed or dispersed form, said substrate being partially coated with a layer impermeable to the pheromone and carrying, adhering to its external surface, an insecticide or a substrate impregnated with an insecticide.

For the formation of both the pheromone-containing substrate as well as of the optional substrate containing an insecticide, any natural, artificial or synthetic fibre or fibril may be used. In practice, fibres or fibrils which are weldable to the impermeable layer such as polyethylene fibrils alone or in admixture with cellulose fibres, are preferred.

The fibrous substrate may be in the form of paper, of non-woven fabrics, felt, cloth, etc. and may have any shape and size suited for the purpose, e.g. sheets of square, rectangular or polygonal shape, or small cylinders, parallelepipedons or spheroids.

The impermeable coating layer may be a film of e.g. aluminum, nylon, polyester, polyvinylchloride, or a polyolefin such as polypropylene,

## EXAMPLE 1

A sheet of paper 1.10 mm thick, containing 80 % of polyethylene fibrils (FERLOSA -registered trade mark of MONTEDISON) and 20 % of cellulose with a specific weight of 380 g/m², was coated on both sides by pressing it in a mold 0.75 mm thick, at 115°C, together with a three-layered polyester-aluminum-polyethylene composite film, the 3 layers having a thickness of 15µm, 8µm and 90µm, respectively, and layed out in such a way that the polyethylene layer faces the paper.

Squares of 20 mm side length were cut out of the laminate obtained and then impregnated by dipping them into a 10 % dichloromethane solution of cis, trans-9,12-tetradecadienyl acetate (sexual pheromone of different kindred species of Ficitide Leptidoptera of foodstuffs), of 2-hydroxy-4'-octyloxy-benzophenone (UV-stabilizer) and of pentaerythrite-2,6-di-tert-butyl-phenol propionate - (antioxidant).

After complete evaporation of the solvent, each square sample contains about 2 mg of cis,trans-9,12-tetradecadienyl acetate and 1 mg,respectively, of the stabilizer and the antioxidant.

To these squares was then glued a square of the same size and prepared as follows:

A paper of the type described above, but having a thickness of 0.46 mm (220 g/cm²) was cut into squares and impregnated with a dichloromethane solution containing 5 % of technical cypermethrine (synthetic pyrethroid) and 10 % of vaseline oil. After complete evaporation of the solvent, each square contained about 5 mg of cypermetrine and about 10 mg of vaseline oil.

The pheromone dispensers combined with the insecticide-impregnated supports were applied by means of an adhesive tape at suitable points (walls, ceilings, windows, pipes, braces, etc.) in the rooms of a mill located in a place called Borghetto Lodigiano (Mi) which grinds soft wheat to flower for bread-making and which is infested all year round by meal moth Ephestia kuehniella. The composites were distributed in a proportion of one every about 5 m² of walls and ceiling in 3 rooms of about 500 m³ and located on different floors.

The experiment was conducted during the months June and July. During that period there was not carried out any insecticide treatment in the mill. The efficacy of the method was assessed by determining at the start and thereafter every 15 days the number of Ephestia adults present on the walls and ceiling of the middle room (room of the refiner or cleanser). The data so obtained were compared with the data of control counts carried out on the walls of another room of similar dimensions (room of the sieves) placed above the other two rooms and not communicating with them. In this third room no dispensers had been distributed.

The data obtained from the periodical observations carried out for the 60 days of the test, are summarized in the following table.

T A B L E

| Days from start of test | Average number of adults per $m^2$ | |
| --- | --- | --- |
| | Treated | Control |
| 0 | 2,64 | 1,50 |
| 15 | 0,11 | 1,80 |
| 30 | 0,04 | 2,13 |
| 45 | 0,03 | 2,90 |
| 60 | 0,05 | 2,48 |

During the counts in the rooms in which dispensers had been distributed, there was noted the presence of numerous E.kuehniella that had dropped to the floor.

EXAMPLE 2

A Ferlos ® paper 0.55 mm thick and containing 60 % of polyethylene fibrils and 40 % of cellulose - (200 g/m²), was coupled at 115°C, on both sides, with the film used in example 1. The resulting composite had a thickness of 0.45 mm.

From this composite were then cut out 24 × 24 mm square specimens which were dipped into a dichloromethane solution containing the pheromone mixture of Cydia molesta (peach Cydia) in a concentration of 20 % by weight and 1 % of the stabilizer and the antioxidant used in example 1.

Each specimen, after complete evaporation of the solvent, contained 1,86 mg of cis-8-dodecenyl acetate, 0, 14 mg of trans-8-dodecenyl acetate, 0,02 mg of cis-8-dodecenol, 5 mg of dodecanol and 0,1 mg, respectively, of stabilizer and antioxidant.

Besides, there were prepared square specimens of Ferlosa ® paper containing cypermetrine and vaseline oil according to the procedure described in example 1.

By means of a clincher, the squares containing the pheromone mixture and the squares with the insecticide were coupled together and simultaneously applied to the branches of peach trees of a 2500 m² plot (120 trees), located in a place called Volpedo (AL), in a proportion of two squares per tree.

In the centre of the peach orchard there was placed a commercial trap "TRAPTEST" for the control of C.molesta flies while a similar trap was placed in the centre of a plot of similar size and located some 300 m from the former.

The test, which was conducted from the beginning of May up to the end of August, involved both counting the captured insects in the pheromone traps as well as evaluating the damages of the sprouts and fruits caused by the Cydia on the two lots.

During the 4 months' test, the dispensers were applied twice. During said period, on the trap placed inside the area in which there had been distributed the pheromone dispensers coupled with the insecticide-containing supports, only 3 males were captured by the end of June when it was decided to apply the dispensers a second time. On the other hand, in the trap placed in the control peach orchard there were captured a total of 423 males.

The percentage of damaged sprouts at the end of June amounted to 1,46% in the area in which the dispensers had been distributed, compared to 9,24 % in the control plot that had not been subjected to any conventional treatment with insecticides.

At the picking time, 0,85 % of the fruits in the peach orchard protected with the dispensers were attacked compared to 6,34 % in the control peach orchard.

EXAMPLE 3

A paper 1,10 mm thick, containing 60 % of polyethylene fibrils (Ferlosa ®) and 40 % of cellulose (320 g/m²) was coupled at 105°C at both sides to a 0.08 mm low density polyethylene film. From the resulting laminate which had a thickness of 0.75 mm were cut 10 × 10 mm square specimens which were dipped into a dichloromethane solution containing 15 % cis-9-tricosene (Muscalure), an aggregation pheromone of the Dipteros Musca domestica. After complete evaporation of the solvent, each specimen contained about 2 mg of cis-9-tricosene.

Besides, squares of yellow drawing paper 30 x 30 mm were impregnated, by dipping, with Baygon EC (20 % of Propoxur; Bayer Italia S.p.A.).

In the centre of each of these squares carrying the insecticide, there was glued a small square impregnated with Muscalure.

The couplings were fixed by means of a glue to the walls of a room (120 m³) which was empty and illuminated by natural light, the temperature varying between 20°C during night hours and 25°C during day hours and the relative humidity being around 60 %.

The dispensers were distributed in a proportion of one for every 10 m² of walls and ceiling. The test was started at 9 a.m. by releasing into the room 500 adults of Muscae domesticae 2 -3 days old, drawn at random out of a mixed population which was grown artificially.

The efficiency of the method was assessed by means of 5 countings of the number of dead individuals, carried out at different times during the 48 hours after the start of the test. The results of the various countings are given in the following table:

T A B L E

| Time from start of test (hours) | Number of adults |
|---|---|
| 3 | 127 |
| 10 | 316 |
| 24 | 352 |
| 32 | 438 |
| 48 | 473 |

After 48 hours from the start no living flies could be observed. The missing insects must be considered as having escaped during the test.

**Claims**

1. A device for fighting noxious insects, which comprises a substrate of fibres and/or fibrils containing a pheromone in adsorbed or dispersed form, said fibrous substrate being partially coated with a layer impermeable to the pheromone and carrying, adhering to its external surface, an insecticide or a substrate impregnated with an insecticide.

2. A device according to claim 1, wherein said substrate is in the form of paper, a non-woven fabric, felt, or cloth, made of natural, artificial or synthetic fibres or fibrils.

3. A device according to claim 1 or 2, wherein said substrate is in the form of a paper consisting of polyethylene fibrils in admixture with cellulose fibres.

4. A device according to any one of claims 1 -3, wherein said impermeable layer is a film of polyolefin, aluminum, nylon, polyester, polyvinylchloride, either alone or in combination with each other or with other films.

5. A device according to any one of claims 1 -4, which is provided with slits or through-holes.

6. A process for the production of the device according to claim 1, which comprises the steps of coupling the fibrous substrate with the impermeable layer, impregnating said fibrous substrate with a pheromone either before or after its coupling with the impermeable layer, applying to the surface of the impermeable layer an insecticide, and, optionally, providing apertures in the composite.

7. A process according to claim 6, wherein the impermeable layer is coupled with the pheromone-containing substrate and the insecticide-containing substrate by thermo-welding, glueing or clinching.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 346 974 (HERCULITE PROTECTIVE FABRICS) * Page 2, line 20 - page 3, line 3; example * | 1-7 | A 01 N 25/18 |
| X | FR-A-2 250 479 (KUREHA) * Claim * | 1-7 | |
| X | FR-A-2 503 537 (THE UNITED STATES) * Claim 1 * | 1-7 | |
| X | GB-A-2 018 593 (UNILEVER) * Claims 1,5 * | 1-7 | |
| X | US-A-4 160 335 (H. VON KOHORN et al.) * Abstract; column 6, line 1 - column 7, line 2 * | 1-7 | TECHNICAL FIELDS SEARCHED (Int. Cl.4) A 01 N |
| A | US-A-4 445 641 (R.W. BAKER) | | |

The present search report has been drawn up for all claims

| Place of search | Date of completion of the search | Examiner |
|---|---|---|
| THE HAGUE | 05-08-1986 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82